**Europäisches Patentamt**

**European Patent Office**

**Office européen des brevets**

(19)

(11) Numéro de publication : **0 573 345 A1**

# (12) DEMANDE DE BREVET EUROPEEN

(21) Numéro de dépôt : **93401386.3**

(22) Date de dépôt : **01.06.93**

(51) Int. Cl.$^5$ : **G06F 15/70**

(30) Priorité : **03.06.92 FR 9206711**

(43) Date de publication de la demande :
**08.12.93 Bulletin 93/49**

(84) Etats contractants désignés :
**DE GB IT NL**

(71) Demandeur : **COMMISSARIAT A L'ENERGIE ATOMIQUE**
**31-33, rue de la Fédération**
**F-75015 Paris (FR)**

(72) Inventeur : **Lionti, Rosolino**
**10, Impasse Saint-Ange**
**F-38180 Seyssins (FR)**
Inventeur : **Jacquot, Jean-Luc**
**17, rue de la Forêt**
**F-68460 Lutterbach (FR)**

(74) Mandataire : **Dubois-Chabert, Guy et al**
**c/o BREVATOME 25, rue de Ponthieu**
**F-75008 Paris (FR)**

(54) **Procédé de comparaison de flots de données et dispositif de mise en oeuvre.**

(57) L'invention concerne un procédé pour comparer deux flots de données relatifs, par exemple, à deux images.

Ce procédé consiste tout d'abord à effectuer un prétraitement de chacune des images I1 et I2 afin de corriger leurs défauts dus à l'acquisition desdites images. La comparaison des images I1 et I2 est réalisée par minimisation de l'image de différences binaire, sans calcul du décalage spatial. L'image différence binaire peut ensuite être érodée. Une analyse de connexité permet alors de dresser la liste des défauts entre les images.

L'invention concerne également le circuit intégré permettant de mettre en oeuvre ce procédé.

Application au traitement d'images.

FIG. 3

La présente invention concerne un procédé de comparaison de deux flots de données comprenant chacun des signaux numériques relatifs, par exemple, à des images.

Ce procédé permet en effet de comparer un premier flot de données numériques avec un second flot de données numériques pris comme flot de référence. Ces flots de données numériques sont relatifs, selon un mode de mise en oeuvre du procédé, à des images. Aussi, afin de permettre une meilleure compréhension de ce procédé, la description dudit procédé sera réalisée dans le cas où les flots de données sont relatifs à des images.

Un tel procédé peut être mis en oeuvre, par exemple, au moyen d'un circuit électronique qui sera décrit ultérieurement.

La présente invention trouve de nombreuses applications dans les domaines de la reconnaissance d'objets ou du contrôle d'objets. Elle peut être utilisée, par exemple, pour le contrôle de conformité de pièces par comparaison avec un modèle de référence, pour le contrôle de stabilité et de répétabilité d'un processus de fabrication par comparaison de pièces entre elles, ou encore, pour la reconnaissance d'objets par comparaison avec une bibliothèque d'objets connus. Cette dernière application peut être, de façon plus particulière, de la reconnaissance de caractères.

De nombreux procédés permettent actuellement de mettre en évidence des différences significatives entre deux images, à savoir une image à analyser et une image de référence.

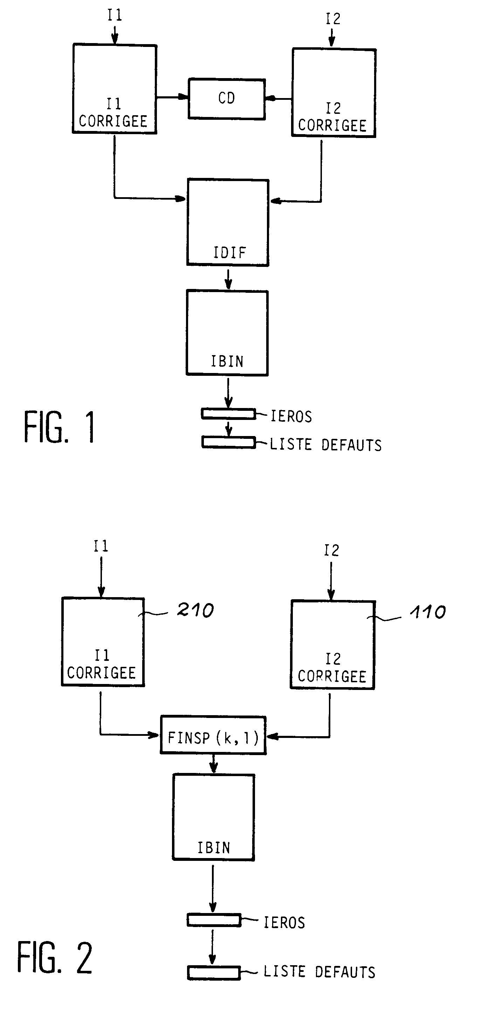

Sur la figure 1, on a représenté, de façon fonctionnelle, les étapes effectuées par les procédés connus pour comparer deux images entre elles. En effet, ces procédés connus consistent, généralement, à faire l'acquisition d'une image I1 et d'une image I2, à effectuer des prétraitements sur ces images I1 et I2 et, ensuite, à calculer le décalage spatial entre les deux images afin de réaliser une image de différences (sur laquelle apparaissent les différences de niveaux de gris) en tenant compte du décalage spatial déterminé.

De façon plus précise, on voit sur cette figure 1, le bloc IC1 qui représente l'image I1, le bloc IC2 qui représente l'image I2, ces images I1 et I2 étant alors corrigées grâce aux prétraitements. Ces prétraitements ont pour but, en effet, de corriger les défauts de la chaîne d'acquisition des images, à savoir, les distorsions géométriques de l'image, les bruits de l'image, la mauvaise uniformité spatiale de l'éclairage, etc. Ces prétraitements sont classiques, bien que spécifiques à l'équipement utilisé pour l'acquisition des images.

Lorsque ces images sont corrigées, une étape, représentée par le bloc référencé CD, consiste à effectuer un calcul du décalage spatial existant entre l'image I1 et l'image I2. Lorsque ce décalage spatial a été déterminé, l'image I2 et l'image I1 sont comparées en tenant compte du décalage déterminé, pris en compte sous une forme entière. On obtient alors l'image de différences IDIF contenant les différences de niveaux de gris entre les images I1 et I2 corrigées du point de vue décalage.

Cette image de différences IDIF est ensuite binarisée, c'est-à-dire écrite sous forme binaire, en utilisant une valeur seuil pour sélectionner les différences significatives, qui sont considérées comme des défauts (c'est-à-dire les données dont la valeur est supérieure à la valeur seuil) par rapport aux différences non-significatives qui ne sont pas considérées comme des défauts de l'image I2. Cette image de différences binarisée IBIN subit ensuite une érosion binaire qui permet de supprimer les différences dites normales entre les circuits intégrés contenant l'image I1 et le circuit intégré contenant l'image I2. Ces différences normales sont les différences qui ont été déterminées comme non-significatives. Elles peuvent être des différences de largeur, de forme des transitions, des différences de gravure, ou encore, éventuellement, des différences de grossissement et d'orientation. A la suite de cette érosion binaire, on peut extraire et calculer les paramètres des défauts afin de constituer une liste des défauts et de leurs caractéristiques.

De tels procédés ont été décrits dans de nombreuses publications dont, notamment, le brevet américain publié sous le numéro US-4 805 123, déposé le 14 février 1989 par la Société KIA INSTRUMENTS CORPORATION. Ce procédé est également décrit, au moins en partie, dans l'article, intitulé "Precise visual inspection algorithm for LSI wafer patterns using grayscale image comparision", de Yukio MATSUYAMA, Hisafumi IWATA, Hitoshi KUBOTA, Yasuo NAKAGAWA, et publié dans IAPR Workshop on CV-Special Hardware and Industrial Applications, October 1988.

D'autres documents concernant de tels procédés de détection de défauts sont, notamment, l'article intitulé "P300 : An approch to automated inspection of patterned wafers", de Virginia BRECHER, Raymond BONNER, publié dans SPIE, Vol. 1087, Inspection Circuit Metrology, Inspection and Process Control III (1989), et la thèse du Docteur-Ingénieur Y. DAHER de l'INSTITUT NATIONAL POLYTECHNIQUE DE GRENOBLE (12/12/1985), intitulée "Une méthode d'alignement d'images pour l'inspection automatique en microélectronique. Application aux réticules et aux masques".

Certains de ces documents décrivent, notamment, l'étape de calculs du décalage spatial entre l'image I1 et l'image I2. Elle peut être réalisée selon plusieurs méthodes.

Une première méthode consiste en la mise en correspondance de primitives. Une telle méthode consiste tout d'abord à extraire des images, des primitives plus ou moins élaborées, telles que des segments, des coins, des points de contour, etc., puis à mettre en correspondance les primitives de l'image I1 et celles de l'image I2 par des techniques de programmation dynamique, telles que celles décrites dans le dernier document cité (Thèse de Y. DAHER).

Une seconde méthode concerne la corrélation des projections. Elle consiste à effectuer un calcul du gradient horizontal, à effectuer la projection verticale de ce gradient, à calculer le vecteur de corrélation horizontal, à minimiser ce vecteur de corrélation horizontal qui indique le décalage horizontal de l'image I2 par rapport à l'image I1, à calculer le vecteur de corrélation vertical et à déterminer le minimum de ce dernier pour obtenir le décalage vertical de l'image I2 par rapport à l'image I1.

Cette méthode de corrélation, et d'autres méthodes utilisant également des corrélations, sont décrites dans les documents "Corrélation techniques of image registration" de William K. PRATT", publié dans IEEE Transactions of aerospace and electronic systems, Vol. AES-10, n° 3, Mai 1974, et "A class of algorithms for fast digital image registration" de Daniel I. BARNEA et Harrey F. SILVERMAN, publié dans IEEE Transactions of computers, Vol. c21, N° 2, Février 1972.

Une autre méthode de calcul du décalage spatial consiste à utiliser une corrélation binaire. Cette méthode comporte une opération d'extraction des contours des images I1 et I2, de mise en correspondance des contours de ces deux images par corrélation binaire entre lesdites images, pour différents décalages possibles, et la recherche du maximum de la matrice de corrélation qui donne le décalage entre les images I1 et I2.

Une autre méthode pour calculer le décalage spatial entre deux images utilise une corrélation des images. Cette méthode consiste à calculer un tableau de corrélation entre l'image I1 et l'image I2 (en tenant compte des décalages spatiaux horizontal et vertical) et à rechercher le maximum de cette matrice de corrélation pour obtenir le décalage entre les images I1 et I2.

Enfin, une quatrième méthode de calcul du décalage entre I1 et I2 utilise la pseudo-corrélation, c'est-à-dire qu'elle consiste en un calcul du tableau de corrélation entre les images I1 et I2, et en la détermination du minimum de la matrice de corrélation afin de connaître le décalage entre les images I1 et I2.

Ces méthodes présentées succinctement, mais connues de l'homme de l'art, ont pour inconvénient d'être lourdes car, à chaque décalage possible, un grand nombre d'opérations doit être réalisé. Elles nécessitent donc des opérations spécifiques pour le calcul du décalage spatial (par exemple extraction de contour, calcul de gradient et projection, etc.) qui sont généralement complexes à mettre en oeuvre et donc, souvent, d'un coût relativement élevé.

En outre, certaines de ces méthodes sont réalisées à l'intérieur de sous-images, chaque opération est donc d'autant plus coûteuse en calculs que le nombre des sous-images est important.

De plus, lorsque le décalage est estimé en fractions de pixels par interpolation sur le tableau de corrélation, il est difficile de garantir que la comparaison entre les deux images soit optimale. En effet, plusieurs approximations interviennent au cours des calculs. La robustesse et la sensibilité d'un tel procédé s'en trouvent donc réduites.

L'étape de comparaison entre l'image I1 et l'image I2 peut également être effectuée selon plusieurs méthodes.

Une première méthode consiste à utiliser l'écart quadratique entre des fenêtres. De façon plus précise, elle consiste, lorsque le décalage est corrigé, à calculer une fonction de ressemblance dans chaque fenêtre de l'image I1 et de l'image I2, centrée sur le pixel (i, j) et de taille T, et à effectuer la binarisation de cette fonction de ressemblance.

Cette méthode de comparaison contient deux paramètres, à savoir une valeur de seuil utilisée pour la binarisation, et la taille T de la fenêtre. La valeur de seuil permet de régler la sensibilité, c'est-à-dire l'importance des différences entre les deux images, à partir de laquelle on choisit de considérer, ou non, les différences comme des défauts. Un inconvénient de cette méthode est le choix de la taille de la fenêtre, car une petite fenêtre entraîne une forte sensibilité, mais une mauvaise robustesse au bruit et aux différences dites normales, alors qu'une grande fenêtre ne permet pas d'atteindre une bonne sensibilité.

Une seconde méthode de comparaison des deux images consiste à calculer une différence pixel à pixel, pour un décalage spatial entier ; à effectuer une détection des zones de transition par changement de signe de l'image de différences IDIF. Sur ces zones, l'image de différences est alors mise à zéro ; à calculer la valeur absolue de l'image de différences ; à effectuer une binarisation de cette image de différences en valeur absolue ; et à dresser une liste des défauts, c'est-à-dire des différences dont la valeur est supérieure à la valeur de seuil choisie pour la binarisation.

Une troisième méthode de comparaison de l'image I1 avec l'image I2 consiste à utiliser la mise en oeuvre d'un traitement de bas et haut niveaux. Les traitements de bas niveau ont pour rôle de détecter des différences avec une forte sensibilité ; ces traitements sont par exemple un test de différence dans des fenêtres, un test sur le gradient, ou encore, un test sur les lignes de l'image. Les traitements dits de haut niveau ont pour rôle d'éviter la détection de faux défauts ; on peut effectuer, par exemple, un test sur plusieurs acquisitions de la même scène lorsque des défauts sont détectés au bas niveau, ou encore, effectuer un test de voisinage autour des pixels ayant des défauts.

Ces procédés connus ont pour inconvénient, notamment, de ne permettre un décalage entre deux images que d'un nombre entier de pixels.

La présente invention a donc pour objet un procédé permettant de comparer l'image I1 par rapport à l'image I2 pour un décalage quelconque, c'est-à-dire un décalage réel qui se décompose en un nombre entier de pixels et un nombre fractionné (non-entier) de pixels. En outre, ce procédé ne nécessite pas de circuit de mise en oeuvre trop complexe, la plupart des opérations étant très simples à mettre en oeuvre. Le coût du circuit de mise en oeuvre de ce procédé est donc d'un coût bien plus faible que celui des circuits proposés dans les arts antérieurs.

De façon plus précise, la présente invention concerne un procédé pour détecter des différences significatives d'un premier flot de données numériques par rapport à un second flot de données numériques. Ce procédé comprend :
- une première opération d'acquisition du premier et du second flots de données ;
- une seconde opération de prétraitement des flots de données ainsi acquis ;
- une troisième opération de comparaison des deux flots de données,
caractérisé en ce que cette opération de comparaison consiste à :
- déterminer un flot de différences (IBIN) comportant sensiblement toutes les différences binaires entre les données du premier flot de données et celles du second flot de données, les différences binaires étant des différences données à données binarisées par comparaison à au moins une valeur de seuil (SEUIL) ; et
- à choisir, parmi ces différences binaires, la différence binaire minimale pour déterminer, à partir de cette différence, les différences suffisamment importantes pour être des données significatives.

Avantageusement, l'opération de comparaison consiste en outre à déterminer, par une analyse de connexité et un regroupement des connexes réalisés par un processeur, des données du premier flot qui sont voisines des données significatives sélectionnées et qui comportent un décalage par rapport aux données du second flot, ceci afin d'obtenir de façon automatique une liste des différences significatives du premier flot de données par rapport au second flot de données.

Selon un mode de réalisation préféré de l'invention, les premier et second flots de données sont respectivement relatifs à une première et à une seconde image $I1(i, j)$ et $I2(i, j)$, où $i$ et $j$ sont des indices de colonnes et de lignes de pixels de l'image. Dans un tel cas, la fonction de différences à minimiser est :

$$\left| I1(i + k, j + l) - I2(i, j) \right|,$$

où $k$ et $l$ sont des indices de décalage en colonnes et en lignes du premier flot de données par rapport au second flot de données. Dans ce cas également, le flot de différences est relatif à une image de différences $IMDIF(i, j)$ obtenue par application de l'expression :

$$IMDIF(i, j) = \left| I1(i + k_{opt}, j + l_{opt}) - I2(i, j) \right|,$$

où $k_{opt}$ et $l_{opt}$ sont des indices de décalage optimum sur, respectivement, les colonnes et les lignes de la première image.

De plus, lorsque les indices de décalage $(k, l)$ ne sont pas des valeurs entières, le décalage optimum $(k_{opt}, l_{opt})$ est obtenu par interpolation du pixel $(i+k, j+l)$ avec les pixels voisins, à l'aide des moyens de calculs mettant en application l'expression :

$$I1(i+k,\ j+l) = (1-k,\ k) ** \begin{pmatrix} 1-l \\ l \end{pmatrix} ** I1(i,\ j)\ ,$$

où le signe $**$ représente un produit de convolution.

De façon plus précise, l'opération de prétraitement consiste en une correction des distorsion géométriques des première et seconde images, en une correction d'uniformité desdites première et seconde images, en un filtrage pour atténuer le bruit desdites première et seconde images, et en une adaptation de dynamique entre la première et la seconde image pour homogénéiser leur contraste.

Le dispositif de mise en oeuvre de ce procédé comporte un unique circuit électronique permettant d'effectuer l'opération de comparaison des deux flots de données par minimisation de la différence.

De façon plus précise, le premier et le second flots de données étant respectivement relatifs à une première et une seconde images $(I1(i,j)$ et $I2(i,j))$, où $i$ et $j$ sont les indices de colonne et de ligne de pixels des images, le circuit électronique comporte :
- des ports d'entrée (P1, P2, P3) assurant l'introduction respective, dans ledit circuit, des images $I1(i,j)$ et I2(i,j) et de la valeur de seuil ;
- un module (2) de rééchantillonnage selon les lignes de l'image I1(i,j) dont le port d'entrée (P1) est connecté sur des entrées (E1, E2, E3) dudit module, chaque entrée recevant l'image I1 décalée en ligne ;
- une pluralité de modules (4, 8, 14) de rééchantillonnage selon les colonnes recevant, en entrées, l'image I2, la valeur de seuil et l'une des sorties du module de rééchantillonnage selon les lignes ;
- une pluralité de cellules aptes à effectuer la différence |I2-I1| entre l'image I1 et l'image I2, ces cellules étant regroupées en plusieurs ensembles (6, 10, 16) de m cellules, où m est un nombre entier, chaque cellule d'un ensemble étant connectée à une sortie de l'un des modules de rééchantillonnage selon les colonnes et l'un de ces ensembles fournissant, en sortie, une image (IBIN) de différences binaire ;
- un module (12) d'érosion binaire connecté, en entrée, aux sorties de l'un des modules de rééchantillonnage selon les colonnes et fournissant à sa sortie une image (IEROS) érodée ; et
- un multiplexeur (18) sur lequel est connectée, en entrée, une sortie de chaque ensemble de cellules et dont une sortie est connectée sur un microprocesseur (20).

D'autres avantages et caractéristiques de l'invention apparaîtront au cours de la description qui va suivre, donnée à titre illustratif, mais nullement limitatif, en référence aux dessins dans lesquels :
- la figure 1, déjà décrite, représente de façon fonctionnelle un procédé classique de traitement pour la comparaison d'images ;
- la figure 2 représente, sous forme fonctionnelle, le procédé selon l'invention pour comparer deux images ;
- la figure 3 représente l'algorithme utilisé dans le procédé selon l'invention ;
- la figure 4 représente, de façon fonctionnelle, le synoptique du circuit intégré mettant en oeuvre le procédé selon l'invention ;
- la figure 5 représente le schéma fonctionnel de l'opération de rééchantillonnage dans la direction des Y, c'est-à-dire selon les lignes de l'image ;
- la figure 6 représente, sous une forme fonctionnelle, l'opération de rééchantillonnage dans la direction des X, c'est-à-dire selon les colonnes de l'image ; et
- la figure 7 représente, de façon fonctionnelle, la cellule d'inspection, c'est-à-dire la cellule dans laquelle est effectuée la comparaison des deux images selon le procédé de l'invention.

Sur la figure 2, on a représenté un diagramme fonctionnel montrant les principales étapes du procédé selon l'invention. Les images I1 et I2, après l'opération d'acquisition des images, subissent des prétraitements. L'image I1, considérée comme l'image à inspecter, est traitée dans le bloc 210. A la sortie de ce bloc 210, on obtient une image I1 corrigée. Parallèlement, l'image IM2 est traitée dans le bloc 110 pour devenir, à la sortie dudit bloc 110, l'image I2 corrigée. Ces deux images I1 corrigée et I2 corrigée sont introduites dans le bloc de minimisation de la fonction de différences FINSP(k, l). Cette fonction FINSP(k, l) se définie par l'expression suivante :

$$FINSP(k, l) = |I1(i + k, j + l) - I2(i, j)|,$$

où i et j sont les indices respectivement de colonnes et de lignes de chaque pixel de l'image, et où k et l sont les indices de décalage selon, respectivement, les lignes et les colonnes de l'image.

Cette fonction FINSP est minimisée afin de permettre la détermination d'un couple optimum, à savoir du couple $(k_{opt}, l_{opt})$ qui correspond au décalage horizontal optimum et au décalage vertical optimum. Lorsque ce couple optimum $(k_{opt}, l_{opt})$ est déterminé, on détermine une image de différences IDIF. Cette image de différences est déterminée en faisant la différence entre l'image I2 et l'image I1, pixel à pixel, en tenant compte du décalage optimum déterminé. Cette image de différences est réalisée en appliquant l'expression suivante :

$$IDIF(i, j) = |I1(i + k_{opt}, j + l_{opt})I2(i, j)|.$$

Lorsque cette image de différences IDIF a été déterminée, on effectue la binarisation de cette image de différences, notée IBIN. On entend, par le terme de "binarisation", le fait d'écrire sous une forme binaire cette image de différences. De façon plus précise, on compare la valeur de chaque pixel (en niveau de gris) par rapport à une valeur de seuil préchoisie. Les pixels dont la valeur est supérieure à cette valeur de seuil reçoivent la valeur 1, tandis que les pixels dont la valeur est inférieure à cette valeur de seuil reçoivent la valeur zéro. On obtient ainsi une image binaire IBIN comportant uniquement deux niveaux de gris. L'un de ces niveaux indique que les pixels ont une différence significative, et donc qu'ils sont considérés comme des défauts de l'image. L'autre niveau indique que les pixels ayant ce niveau de gris ont une valeur inférieure à la valeur de seuil choisie pour la binarisation et donc que leurs différences par rapport à l'image I2 de référence est une différence dite normale.

A partir de cette image de différences binaires, on effectue une érosion binaire (bloc IEROS) qui permet de supprimer ces différences dites normales.

Lorsque ces différences, dites normales, ont été supprimées, on constitue la liste des défauts qui correspond à la liste des données significatives déterminées lors de la binarisation de l'image de différences.

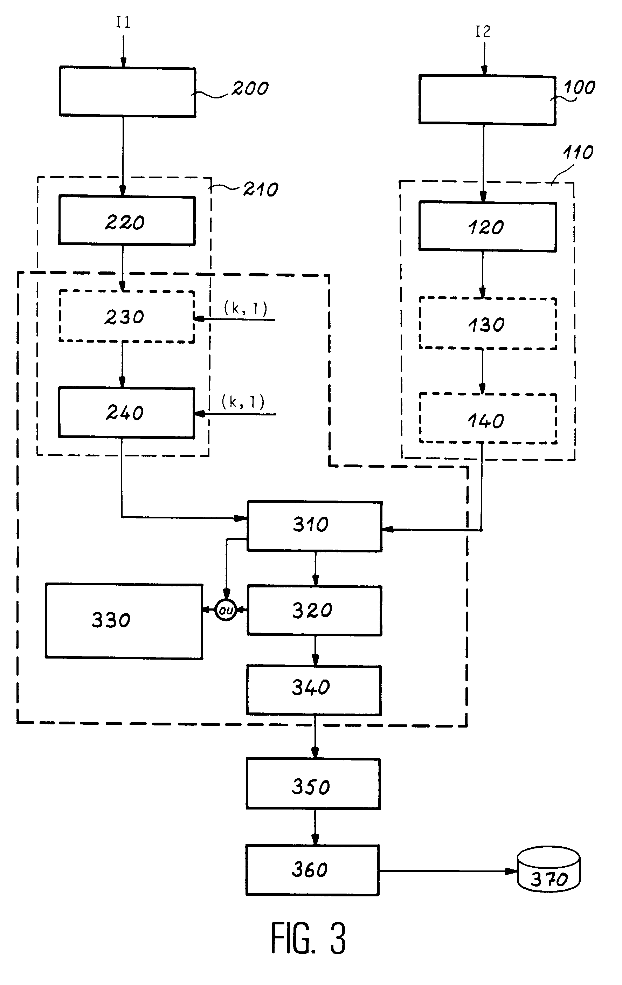

La figure 3 montre, sous une forme fonctionnelle, l'algorithme d'inspection mis en oeuvre par le procédé selon l'invention. On appelle algorithme d'inspection, l'algorithme contenant les différentes séquences de traitement à mettre en oeuvre pour effectuer une comparaison significative entre l'image I1 à inspecter et l'image I2 de référence.

Cet algorithme d'inspection décrit, de façon plus précise, les différentes étapes montrées sur la figure 2.

Sur cet algorithme de la figure 2, on a représenté, par chacun des blocs, l'un des traitements effectués sur l'image I1 ou sur l'image I2. Le bloc 100 représente donc le traitement d'acquisition de cette image I2 considérée comme image de référence. Cette image I2, une fois acquise, subit un prétraitement représenté par le bloc 110. Ce prétraitement 110 comporte un premier traitement, en 120, qui consiste à corriger la mauvaise uniformité spatiale de l'éclairage lors de l'acquisition de l'image I2. Lorsque cette correction d'uniformité a été effectuée, l'image I2 ainsi corrigée peut subir un filtrage spatial, en 130, puis une adaptation dynamique en 140. Ce filtrage spatial 130 et cette adaptation dynamique 140 ne sont pas forcément nécessaires ; en effet, lorsque l'image I2 acquise en 100 est de bonne qualité, la correction d'uniformité 120 est nécessaire, mais le filtrage spatial 130 et l'adaptation dynamique 140 peuvent ne pas être effectués.

Parallèlement à cette acquisition et à ce prétraitement de l'image I2, l'image I1 est acquise dans le bloc 200. Cette image I1 est considérée comme l'image à inspecter. Elle subit également un prétraitement 210 qui consiste, notamment, tout comme le prétraitement 110 de l'image I2, à corriger l'uniformité spatiale de l'éclairage lors de l'acquisition de l'image I1 ; cette correction d'uniformité est effectuée dans le bloc 220. Ce prétraitement 210 de l'image I1 consiste également, dans le cas où l'image I1 acquise n'est pas de bonne qualité, à effectuer un filtrage spatial en 230.

De façon plus précise, la correction d'uniformité (120 et 220) consiste à corriger les mauvaises uniformités de l'image dues à l'éclairage lors de l'acquisition de l'image. En effet, l'image acquise, c'est-à-dire, l'image I1 ou l'image 2, notée de façon générale $I(i, j)$ (où $i$ et $j$ sont les indices de colonne et de ligne de l'image I), comporte des non-uniformités dues principalement à l'éclairage, à l'optique et au capteur d'images utilisés lors de l'acquisition de l'image. On atténue ces défauts en multipliant l'image acquise $I(i, j)$ par une image de coefficient $COR(i, j)$. On obtient ainsi une image corrigée :

$$ICOR(i, j) = I(i, j) * COR(i, j).$$

Cette image de coefficient $COR(i, j)$ est créée à partir d'une image $UNIF(i, j)$ acquise sur l'objet à inspecter en une zone ne comportant pas de motif, c'est-à-dire en une zone comportant uniquement des pixels de fond. Cette image de coefficient est obtenue à partir de l'expression suivante :

$$COR(i, j) = ENTIER[moyenne(UNIF)/UNIF(i, j) * 128],$$

où $moyenne(UNIF)$ représente le niveau de gris moyen de l'image $UNIF(i, j)$ et, où le coefficient 128 correspond à la moitié de la dynamique de $COR(i, j)$.

Le filtrage spatial consiste à atténuer le bruit que comportent les images lorsqu'elles ont été acquises. Cette correction du bruit s'effectue en convoluant l'image corrigée $ICOR(i, j)$ avec un noyau représentant un filtre spatial. Cette correction s'effectue à partir de l'expression suivante :

$$I(i, j) = ICOR(i, j) * * (filtre\ spatial),$$

où $**$ représente le produit de convolution.

La taille du noyau du filtre spatial, ainsi que les coefficients, sont choisis en fonction du type de bruit que l'on désire atténuer.

L'expression ci-dessus, donnée pour la correction du bruit, a été donnée pour une image I quelconque, sachant que l'expression est valable pour l'image I2 ou I1.

L'adaptation de dynamique est une opération qui a pour but d'égaliser la dynamique des images I1 et I2 à comparer, ce qui signifie qu'elle consiste à atténuer les variations de contraste entre les deux images. Cette opération s'effectue par égalisation des histogrammes représentatifs de la dynamique de chacune des images à comparer.

Ces trois opérations de prétraitement, à savoir la correction d'uniformité, le filtrage spatial et l'adaptation de dynamique, sont des techniques connues de l'homme de l'art. Elles ne seront donc pas décrites de façon plus précise dans ce texte.

Lorsque ces étapes de prétraitement sont effectuées pour chacune des images I1 et I2, on effectue la comparaison entre les deux images, sachant que le calcul de décalage qui était effectué dans les procédés connus est supprimé dans le procédé selon l'invention.

D'une façon générale, la comparaison entre les images I1 et I2 consiste à minimiser la fonction $FINSP(k, l)$ par des méthodes numériques classiques, telles que des essais de valeur, une recherche dichotomique, etc. Cette minimisation peut être obtenue avec la précision souhaitée, les variables de décalage $k$ et $l$ n'étant pas nécessairement entières.

La fonction $FINSP(k, l)$ est définie par l'expression suivante :

$$FINSP(k, l) = |I1(i + k, j + l) - I2(i, j)|,$$

6

EP 0 573 345 A1

où FINSP est appelée fonction d'inspection.

Lorsque le décalage (k, l) est entier, ledit décalage est introduit au niveau du bloc 230 du traitement de l'image I1 à inspecter. Les valeurs entières de k et l sont réalisées par une lecture décalées du premier point de la mémoire image.

Lorsque k et l sont des valeurs non entières, on calcule I1(i+k, j+l) en considérant tout d'abord la partie entière de ces valeurs k et l qui sont réalisées par une lecture décalée du premier point de la mémoire image, puis en considérant les valeurs décimales de ces variables k et l. Ces valeurs non-entières des variables k et l sont introduites en 240. Pour ces valeurs décimales, on procède par interpolation du pixel d'indices i+k et j+l avec les pixels voisins dudit pixel. L'interpolation effectuée peut être une interpolation linéaire, une interpolation parabolique, une interpolation du type sin x/x, etc.

Si l'on prend, par exemple, le cas de l'interpolation linéaire, la valeur de I1(i+k, j+l) se détermine à partir de l'expression suivante :

$$I1(i+k, \ j+l)=(1-k, \ k)**\begin{pmatrix}1-1\\1\end{pmatrix}**I1(i, \ j),$$

où ** représente le produit de convolution et * la multiplication.

L'expression indiquée ci-dessus peut également s'écrire sous la forme :

$$I1(i+k, \ j+l)=\begin{pmatrix}(1-k)*(1-1), & k*(1-1)\\(1-k)*1, & k*1\end{pmatrix}**I1(i, \ j).$$

La minimisation de cette fonction FINSP fournit le couple optimum $(k_{opt}, l_{opt})$. On considèrera, comme décalage, dans les étapes qui suivent cette minimisation de la fonction FINSP, le décalage optimum $(k_{opt}, l_{opt})$ ainsi déterminé.

Cette opération de minimisation de la fonction FINSP est représentée, sur l'algorithme de la figure 3, par le bloc 240.

Lorsque ce couple optimum a été déterminé pour l'image I1 à inspecter, on introduit dans le bloc 310 l'image I1 et l'image I2 obtenues en sortie, respectivement des blocs 240 et 110. On effectue alors la différence, pixel à pixel, entre l'image I1 et l'image I2, ce qui fournit une image de différences des niveaux de gris. Cette image de différences, nommée IDIF(i, j), représente toutes les différences entre les niveaux de gris de deux images I1 et I2. Cette différence pixel à pixel est effectuée, pour toute colonne i et pour toute ligne j, à partir de l'expression suivante :

$$IDIF(i, j) = |I1(i + k_{opt}, j + l_{opt}) - I2(i, j)|,$$

où i et j sont les indices de colonne et de ligne des pixels des images.

Aussi, pour effectuer cette différence pixel à pixel entre l'image I1 et l'image I2, on considère, comme décalage entre lesdites deux images, le décalage optimum $(k_{opt}, l_{opt})$ déterminé précédemment.

Lorsque cette image de différences a été déterminée en 310, une opération d'amélioration de ladite image est effectuée. Cette opération d'amélioration de l'image de différences consiste à "binariser" ladite image de différences par rapport à une ou plusieurs valeurs seuil. Cette binarisation de l'image de différences consiste à écrire ladite image sous une forme binaire, c'est-à-dire sous une forme où elle ne comporte plus que deux niveaux de gris.

Ainsi, l'image de différences binarisée à partir d'une ou plusieurs valeurs seuil permet de sélectionner les différences significatives entre l'image I1 et l'image I2. Pour effectuer cette binarisation, on effectue l'opération suivante :

$$IBIN(i, \ j)=1 \ si \ IDIF(i, \ j)\geq VS$$
$$=0 \ si \ IDIF(i, \ j)<VS,$$

où VS est la valeur seuil.

Cette valeur seuil VS de binarisation peut évoluer dynamiquement à chaque pixel en fonction du contexte. En effet, pour l'inspection de circuits intégrés, deux valeurs seuil sont possibles et sont sélectionnées par un

7

masque de binarisation binaire, appelé MASC(i, j).

Cette opération de binarisation, à deux valeurs seuils VS1 et VS2, prend donc la forme suivante :

```
- si MASC(i, j)=1, IBIN(i, j)=1 si IDIF(i, j)≥VS1
                             =0 si IDIF(i, j)<VS1 ;
- si MASC(i, j)=0, IBIN(i, j)=1 si IDIF(i, j)≥VS2
                             =0 si IDIF(i, j)<VS2.
```

Cette binarisation selon plusieurs valeurs seuil peut se généraliser par l'introduction d'une image de seuil SEUIL(i, j) dont le niveau de gris varie en fontion de la valeur seuil désirée.

Cette opération de binarisation, selon au moins une valeur seuil, est effectuée dans le bloc 320.

Le critère de minimisation de la fonction FINSP (c'est-à-dire, minimisation de la différence entre les images I1 et I2) est mis en oeuvre dans le bloc 330. Ce critère peut être utilisé à partir de l'image de différences IDIF obtenue en sortie du bloc 310 ou bien à partir de l'image de différences binaire IBIN obtenue en sortie du bloc 320.

Ce critère de minimisation peut être défini sous deux formes. Il peut être :
- soit la somme des points (c'est-à-dire, des pixels ou des fractions de pixels) à 1 de l'image de différences binaire, ce qui s'exprime de la façon suivante :

$$\min_{k, l} \sum_i \sum_j (signe[\,|I2(i, j)-I1(i+k, j+l)|\,-SEUIL])$$

avec signe=1 si $|IDIF(i, j)| \geqq SEUIL$,
où SEUIL est l'image SEUIL ;
- soit la somme des valeurs absolues des différences sur toute l'image, ce qui s'exprime sous la forme suivante :

$$\min_{k,l} \sum_i \sum_j |I2(i, j)-I1(i+k, j+l)|$$

si $|IDIF(i, j)| \geqq SEUIL$,

Les valeurs k et l obtenues à la sortie du bloc 330 (non représentées sur la figure 3 par soucis de simplification de ladite figure, sont introduites en 230 et 240. La partie entière de ces valeurs est introduite en 230 et représente un décalage d'un nombre entier de pixels ; la partie décimale de ces valeurs est introduite en 240 et représente un décalage d'une fraction de pixel (ou subpixel).

Lorsque cette image de différences a été binarisée, on effectue, sur ladite image, une érosion binaire, en 340. Cette érosion binaire est paramétrable et permet de supprimer les différences dites "normales" entre les images. Ces différences normales sont par exemple les largeurs et les formes des transitions, etc., et, éventuellement, les différences de grossissement et d'orientation. Cette érosion binaire de taille T correspond à l'opération suivante :

```
IEROS(i,    j)=1    si    IBIN(i-k,    j-l)=1    pour
(k, l)∈[o, t]²
              =0 sinon.
```

Ces opérations de binarisation et d'érosion binaire sont des opérations connues de l'homme de l'art et ne se sont donc pas décrites plus en détail dans ce texte.

Suite à cette opération d'érosion, on obtient une image de différences érodée IEROS, c'est-à-dire une image contenant uniquement les différences significatives existant entre les deux images I1 et I2, les différences non significatives ayant été corrigées par cette érosion binaire.

On peut alors dresser la liste des défauts et de leurs caractéristiques. Pour cela, on effectue, en 350, une extraction des défauts, ce qui consiste à effectuer une analyse de connexité et un regroupement de connexes.

Cette analyse de connexité est une opération connue de l'homme de l'art et qui consiste à analyser les pixels voisins des pixels considérés comme ayant une différence significative sur l'image I1 par rapport aux pixels correspondants sur l'image de référence I2.

En effet, on considère qu'un pixel d'indice (i, j) d'une image binaire possède quatre voisins adjacents par un côté, à savoir les pixels d'indices (i-1, j), (i+1, j), (i, j-1), (i, j+1). Certaines analyses de connexité prennent en compte les quatre pixels voisins adjacents par un côté, ainsi que les quatre pixels voisins adjacents par un sommet, ce qui donne huit pixels voisins du pixel d'indice (i, j).

Lorsque cette analyse de connexité, en 350, a été effectuée, on regroupe, en 360, les connexes ainsi analysés pour dresser la liste des défauts, c'est-à-dire la liste des différences significatives existant entre l'image à inspecter I1 et l'image de référence I2. Cette liste des défauts comporte, en outre, pour chacun des défauts, la liste de leurs caractéristiques, à savoir, la position de leur centre de gravité, leur surface, leur rectangle encadrant, etc.

Cette liste des défauts et de leurs caractéristiques, est mémorisée, en 370, dans des moyens de mémorisation informatiques, tels qu'un disque dur.

Cette analyse de connexité et ce regroupement de connexes permettent de dresser la liste des défauts de façon automatique. Néanmoins, un opérateur humain peut effectuer cette opération en visualisant l'image de différences érodée.

Ce procédé selon l'invention a donc pour avantage de garantir une comparaison optimale entre les deux images I1 et I2. En effet, toutes les différences possibles entre ces deux images sont calculées avant de retenir la meilleure, qui correspond au décalage optimum. Ce procédé permet donc d'obtenir une bonne robustesse et une grande sensibilité face aux défauts d'une image par rapport à une autre.

En outre, toutes les opérations effectuées au cours de ce procédé, sont relativement simples, à savoir l'interpolation entre pixels voisins, les différences pixel à pixel, la binarisation et l'érosion binaire. Cette simplicité permet d'intégrer ce procédé dans un circuit électronique ou "HARDWARE" (en terme anglosaxon) relativement simple. Aussi, il est possible d'obtenir, avec un circuit intégrant ce procédé, une vitesse importante pour un faible coût.

Sur la figure 3, décrite précédemment, le bloc 300 représenté en pointillés montre les fonctions mises en oeuvre par le circuit intégré qui va être maintenant décrit.

Ce circuit intégré, que l'on appelera circuit ARTIC (c'est-à-dire, en termes anglosaxons, Accurate Real Time Image Comparator), comporte n x m cellules élémentaires de fonction d'inspection, c'est-à-dire n x m cellules FINSP, disposées en n rangées de m colonnes.

Selon le mode de réalisation préféré de l'invention, ce circuit ARTIC comprend trois rangées de neufs colonnes, c'est-à-dire qu'il comporte 3x9=27 cellules FINSP. Ce circuit ARTIC permet donc de minimiser la différence entre les images I1 et I2 dans la plage des décalages ($K=X\pm4$, $L=Y\pm1$), ce décalage étant donné en nombre de pixels pour un pixel situé en colonne X et en ligne Y, avec X et Y quelconques. Le décalage K est le décalage maximum réalisable horizontalement (c'est-à-dire, selon les colonnes) et L est le décalage maximum pouvant être obtenu verticalement (c'est-à-dire, selon les lignes).

En associant, par exemple, trois de ces circuits ARTIC en ligne, on peut couvrir une plage de décalage de ($K=X\pm4$, $L=Y\pm4$) pixels. En associant trois de ces circuits ARTIC en colonnes, il est possible de couvrir une plage de décalage de ($K=X\pm13$, $L=Y\pm1$).

Pour effectuer la minimisation de la fonction d'inspection FINSP(k, l), il est nécessaire d'effectuer un rééchantillonnage de l'une des deux images à comparer. Ce rééchantillonnage est réalisé avec un pas fractionnaire (pas=$1/2^n$, avec $n\in[0,4]$) et permet de minimiser la différence, c'est-à-dire de minimiser la fonction FINSP avec une précision pouvant aller jusqu'à 1/16 de pixels (dans le cas où n=4).

La plage de décalage couverte dépend du pas de rééchantillonnage. Pour un pas de rééchantillonnage de $1/2^n$, la plage de décalage est ($K=X\pm4/2^n$, $L=Y\pm1/2^n$) avec n appartenant à l'intervalle [0,4].

La minimisation de cette fonction FINSP est réalisée à partir d'un critère de minimisation qui a déjà été décrit précédemment.

La comparaison entre les images I1 et I2 peut être effectuée suivant plusieurs stratégies :

- La première stratégie consiste à effectuer une comparaison avec un pas égal à 1, puis à effectuer une comparaison avec un pas égal à 1/4 autour du minimum trouvé précédemment (autour du minimum trouvé lors de la comparaison avec un pas égal à 1), puis à effectuer une dernière comparaison avec un pas égal à 1/16 autour du minimum trouvé lors de la comparaison avec un pas égal à 1/4. Pour une telle stratégie, on effectue donc trois comparaisons d'images.
- Une seconde stratégie consiste à effectuer une première comparaison avec un pas égal à 1, puis à effectuer un calcul barycentrique de la position du minimum trouvé lors de la comparaison précédente (avec une erreur inférieure ou égale à 1/2 pixel), et enfin à effectuer une comparaison avec un pas égal à 1/8 autour du minimum calculé de façon barycentrique. Cette stratégie consiste donc à effectuer deux comparaisons d'images.

- La troisième stratégie consiste, lorsque le décalage maximum entre les deux images est inférieur à plus ou moins deux pixels (dans la direction verticale ou dans la direction horizontale), à effectuer une comparaison avec un pas égal à 1/2, puis à effectuer une comparaison avec un pas égal à 1/8 autour du minimum trouvé lors de la comparaison précédente. Cette stratégie consiste donc à effectuer deux comparaisons d'images.

Le choix de la stratégie à mettre en oeuvre est fonction de la précision désirée, ainsi que du temps disponible pour effectuer la comparaison entre les deux images.

En outre, quelque soit la stratégie de comparaison des images choisies, on obtient l'image de différences que l'on peut alors binariser, comme cela a été expliqué précédemment, puis sur laquelle on peut appliquer une érosion binaire, ci-avant.

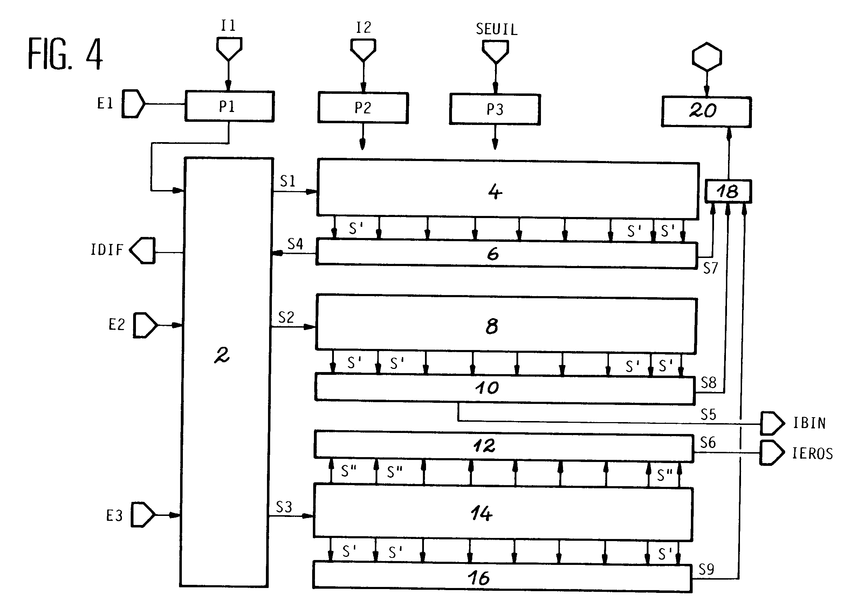

Sur la figure 4, on a représenté le synoptique de ce circuit ARTIC. Les images I1 à inspecter et I2 de référence sont introduites dans les ports P1 et P2 du circuit ARTIC. De même, l'image de seuil SEUIL est introduite dans le port P3 dudit circuit.

La sortie du port P1 est connectée sur le bloc 2 de rééchantillonnage autour du minimum dans la direction Y, c'est-à-dire la direction verticale. Ce bloc 2 de rééchantillonnage permet un pas de rééchantillonnage de $1/2^n$ avec $n \in [0,4]$. Ce bloc de rééchantillonnage sera décrit ultérieurement.

La sortie du port P2 est reliée aux cellules FINSP.

Les sorties du bloc 2 sont connectées à un bloc 4 de rééchantillonnage autour du minimum dans la direction des X, c'est-à-dire dans la direction horizontale. Son pas de rééchantillonnage est également de $1/2^n$ pour $n \in [0,4]$. Ce registre 4 de rééchantillonnage dans la direction des X sera également décrit ultérieurement.

Chacun de ces blocs 2 et 4 de rééchantillonnage, ainsi que chacun des blocs 8 et 14 de rééchantillonnage dans la direction des X permet de décaler au maximum, de plus ou moins quatre pixels, les images I1 et I2 que l'on cherche à comparer. La comparaison de ces images I1 et I2 est effectuée en calculant la valeur absolue de la différence $|I2-I1|$, l'image SEUIL en phase avec l'image I2 permet d'appliquer un seuil particulier à chaque pixel de l'image de différences, lors de l'opération de binarisation de l'image de différences.

Lorsque l'opération de "seuillage" est effectuée à l'aide d'un ou deux seuils, les valeurs de ces seuils sont chargées dans des registres internes. En outre, dans le cas où deux seuils sont utilisés, une image binaire appliquée sur l'entrée du port P3, permet de sélectionner le seuil désiré.

Le bloc 2 de rééchantillonnage dans la direction des Y, dans lequel l'image I1 à inspecter à été introduite, permet de créer un décalage subpixel (c'est-à-dire d'une fraction de pixel) en ligne entre les images à comparer.

Les entrées E1, E2 et E3 du bloc 2 de rééchantillonnage sont destinées à recevoir l'image I1 à inspecter lorsque ladite image a été décalée en ligne. Ainsi, entre E1 et E2, l'image à inspecter I1 est décalée d'une ligne, et entre E2 et E3, l'image I1 est décalée d'une seconde ligne.

Aussi, le bloc 2 de rééchantillonnage dans la direction des Y comporte trois sorties, une sortie S1 correspondant à l'entrée E1 et connectée au bloc 4 de rééchantillonnage dans la direction des X. La sortie S2 du bloc 2 de rééchantillonnage dans la direction des Y correspond à l'entrée E2 et est connectée au bloc 8 de rééchantillonnage dans la direction X. De même, la sortie S3 du bloc 2 de rééchantillonnage correspond à l'entrée E3 et est connectée au bloc 14 de rééchantillonnage dans la direction des X. Ainsi, chaque bloc 4, 8, 14 de rééchantillonnage dans la direction des X reçoit, respectivement, l'image I1, l'image I1 décalée d'un pas subpixel en ligne et l'image I1 décalée de deux pas subpixel en ligne.

Chacun des blocs de rééchantillonnage dans la direction des X comporte une pluralité de sorties S' connectées sur un ensemble de neuf cellules FINSP. Chacun de ces ensembles de neuf cellules est apte à effectuer la différence $|I2-I1|$ et donc à fournir une image de différences. Le premier ensemble 6 de neuf cellules comporte en outre une sortie S4 qui fournit l'image de différences IDIF comportant les différences de niveaux de gris entre l'image I1 et l'image I2.

La sortie S5 du second ensemble 10 de neuf cellules FINSP génère l'image de différences binarisée IBIN. Cette image de différences binarisée a été déterminée à l'aide d'un ou de plusieurs seuils, tels que cela a été décrit précédemment.

Le bloc 14 de rééchantillonnage dans la direction X comporte une seconde série de sorties S" connectées vers un circuit 12 assurant l'érosion binaire de l'image de différences binarisée. La sortie S6 de ce circuit 12 d'érosion binaire fournit l'image érodée IEROS.

En outre, chaque ensemble 6, 10, 16 de neuf cellules FINSP comporte une sortie, respectivement référencée S7, S8 et S9, connectée à un multiplexeur 18 dont la sortie est elle-même reliée à une interface de microprocesseur. L'interface de microprocesseur permet, en effet, de configurer le circuit ARTIC dans les divers modes de fonctionnement et d'extraire les résultats de traitement.

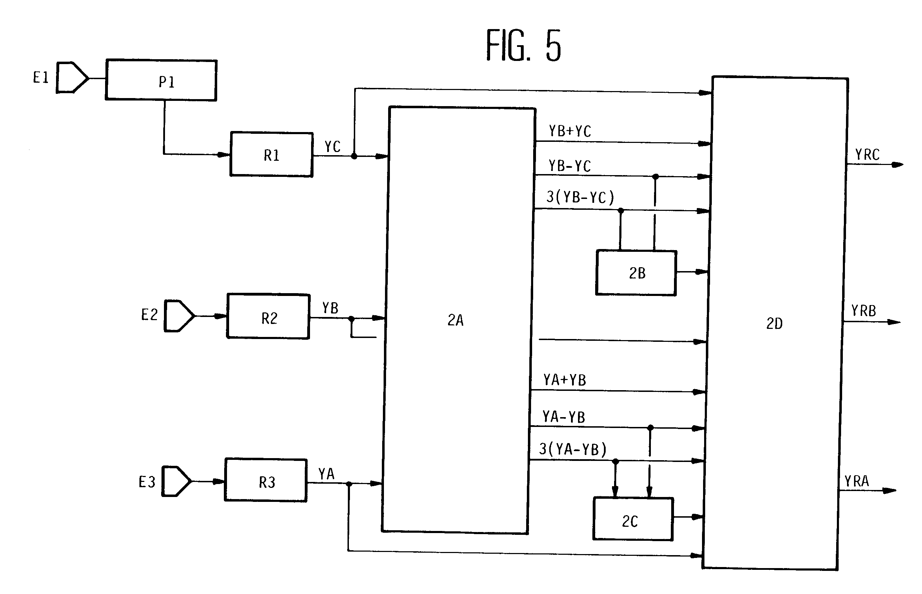

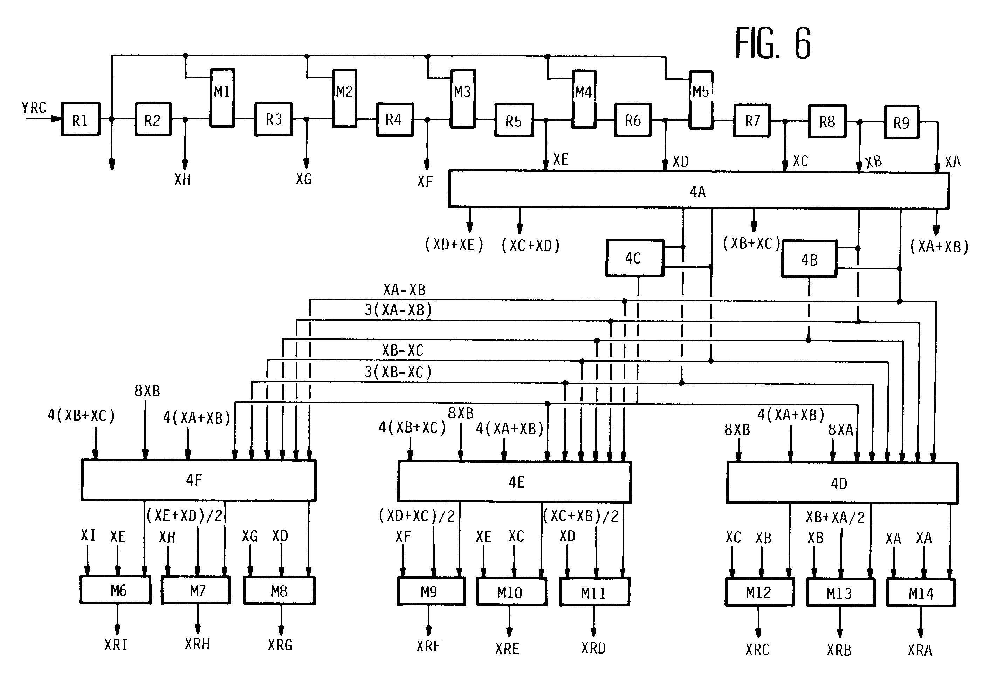

Le rééchantillonnage de l'image I1 à inspecter va maintenant être décrit de façon plus précise en référence aux figures 5 et 6.

Comme cela a déjà été dit précédemment, le rééchantillonnage de l'image I1 est effectué par une interpolation bilinéaire. Cette opération d'interpolation est séparable en lignes et en colonnes. C'est pour cela que le circuit ARTIC, décrit précédemment, comporte trois ensembles de neuf cellules. En effet, une cellule effectue le rééchantillonnage en lignes et génère trois images décalées en ligne d'un pixel ou d'une fraction de pixel selon le pas de rééchantillonnage choisi ; on peut ainsi réaliser la structure suivante :

- une cellule effectuant le rééchantillonnage en lignes et générant trois images décalées en ligne d'un pixel ou d'une fraction de pixel ; et
- neuf cellules de rééchantillonnage en colonnes, trois cellules par ligne permettent de créer neuf images décalées en colonnes d'un pixel ou d'une fraction de pixel.

Une telle structure permet ainsi de créer vingt sept images décalées entre elles en lignes et en colonnes d'un pixel ou d'une fraction de pixel.

Le registre de rééchantillonnage dans la direction Y est représenté sur la figure 5. Ce registre comporte, notamment, le bloc 2A qui permet d'effectuer des sommes et des différences des données YA, YB, YC introduites par les entrées (E1, E2, E3 connectées sur les registres R1', R2', R3'). Ils comportent, en outre, les blocs 2B et 2C qui sont des blocs qui fournissent les différents pas de rééchantillonnage et qui génèrent les signaux d'entrée du bloc 2D de rééchantillonnage. Les signaux d'entrée de ce bloc 2D sont les signaux YA, YB et YC associés ensemble par addition ou soustraction pour donner les signaux YB+YC, YB-YC, 3(YB-YC), YA+YB, YA-YB et 3(YA-YB).

De façon plus précise, le bloc 2A comprend trois entrées contenant comme informations des lignes YA, YB et YC de l'image. Ce bloc 2A génère les signaux suivants :

- la somme YA+YB ;
- la différence YA-YB ; et
- le terme 3(YA-YB) obtenu par la somme (YA-YB)+2(YA-YB),

ces signaux étant donnés pour des lignes d'entrée YA et YB, sachant que le bloc 2A génère des signaux de formes identiques pour les lignes YB et YC.

Le premier bloc 2C de génération des pas utilise les signaux YA-YB et 3(YA-YB) issus du bloc 2A pour obtenir des signaux qui seront donnés dans la suite de la description. Ce bloc 2C comporte un multiplexeur et un décaleur et permet d'obtenir les signaux suivants :

- (YA-YB)/2 ;
- (YA-YB) ;
- 3(YA-YB)/2 ;
- 2(YA-YB) ;
- 3(YA-YB) ; et
- 6(YA-YB).

Le second bloc 2B de génération des pas effectue des opérations identiques au premier bloc 2C, mais à partir des signaux YB et YC reçus du bloc 2A.

L'ensemble de tous ces signaux obtenus à partir des signaux YA, YB et YC sont introduits dans le bloc 2D de rééchantillonnage. Ce bloc 2D comporte un multiplexeur 4 vers 1 pour une voie, l'autre voie comportant un multiplexeur inverseur 5 vers 1 qui permet de choisir un terme, ou bien de choisir la négation de ce terme. Ce bloc 2D comporte également un décaleur offrant le terme inchangé, la moitié ou de le double de ce terme. L'addition des termes générés par les deux voies précédentes conduit aux pixels rééchantillonnés en ligne.

L'addition ou la soustraction à ce pixel d'une valeur égale au pas généré par le premier bloc 2C ou au pas généré par le second bloc 2B conduit aux pixels rééchantillonnés YRA, YRB, YRC (obtenus sur les sorties référéncées S3, S2 et S1) et décalés en ligne, d'un pas de rééchantillonnage entre les sorties S1 et S2 et de deux pas entre les sorties S1 et S3.

Sur la figure 6, on a représenté le bloc 4 de rééchantillonnage dans la direction X. Ce bloc fonctionne selon le même principe que le bloc 2 de rééchantillonnage dans la direction Y qui a été représenté sur la figure précédente. En outre, ce bloc 4 de rééchantillonnage dans la direction X comporte trois blocs 4D, 4E, 4F de rééchantillonnage.

De plus, ce bloc 4 de rééchantillonnage dans la direction X comporte une multitude de multiplexeurs M1, M2, etc., et de registres à décalage, notés R1, R2, etc., R9 dont le rôle est de compenser un éventuel décalage entre les images I1 et I2 à comparer. Les registres à décalage R2 a R6 ont chacun une sortie connectée sur un multiplexeur et connectée, en outre, au bloc 4A assurant les fonctions de sommation et de différences entre les différentes valeurs de sortie desdits registres. Parallèlement, les registres R1, R7 et R8 ont leur sortie connectée au registre suivant (respectivement R2, R8, R9) et connectée également sur ledit bloc 4A. La sortie du registre R9 est, quant à elle, uniquement reliée au bloc 4A.

Tout comme le bloc 2A du bloc 2 de rééchantillonnage dans la direction Y, ce bloc 4A permet d'effectuer des sommes et des différences entre les signaux reçus en entrée. Ces signaux reçus en entrée du bloc 4A sont nommés XA, XB, XC, XE, XF, XG, XH et XI.

Sur la figure 6, on a représenté le bloc 4 de rééchantillonnage, étant bien entendu que les blocs 8 et 14 de rééchantillonnage sont identiques à ce bloc 4.

Le bloc 4A a une partie de ses sorties reliées directement aux différents blocs de rééchantillonnage 4D, 4E, 4F. Ces sorties sont également reliées aux blocs 4B, 4C de génération des différents pas connectés eux-mêmes aux blocs 4D, 4E, 4F de rééchantillonnage.

Les autres sorties du bloc 4A sont reliées aux multiplexeurs M6 à M14.

Ces blocs 4A, 4D, 4E et 4F sont constitués de façon sensiblement identique aux blocs 2A et 2D décrits lors de la description de la figure 5. De même, les blocs 4B et 4C effectuent des fonctions sensiblement équivalentes à celles des blocs 2B et 2C de la figure 5.

En sortie de ces blocs de rééchantillonnage 4D, 4E et 4F, une rangée de neuf multiplexeurs (M6 à M14) 3 vers 1 permet de sélectionner les images décalées de un pixel, ou décalées de 1/2, ou 1/4 ou 1/8 ou 1/16 de pixel, selon le pas choisi. Les sorties de ces multiplexeurs fournissent, aux cellules d'inspection (cellules FINSP) auxquelles elles sont connectées, des signaux rééchantillonnés XRA, XRB, ... , XRI (obtenus sur les sorties référencées S' sur la figure 4).

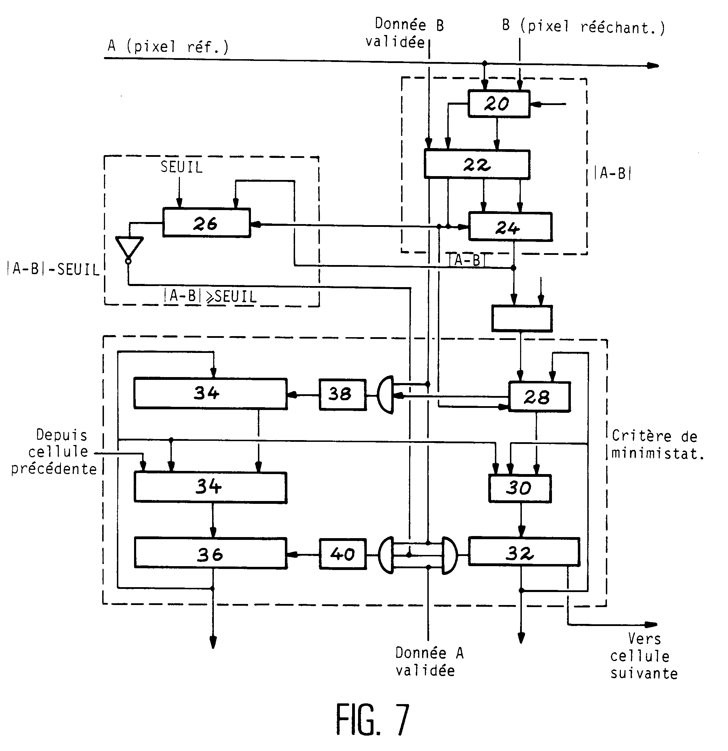

Un exemple d'une de ces cellules d'inspection a été représenté sur la figure 7.

Une telle cellule effectue les opérations suivantes :
- calcul de la valeur absolue de la différence $|I2\text{-}I1|$ ;
- comparaison avec l'image SEUIL par l'expression $[|I2\text{-}I1|\text{-}SEUIL]$ ;
- accumulation lorsque $|I2\text{-}I1| \geqq SEUIL$ ; et
- transfert en série des résultats obtenus lors de l'accumulation.

Sur la figure 7, afin de simplifier la compréhension de ladite figure, les données de l'image I2 seront représentées par la lettre A et les données provenant de l'image I1 seront notées par la lettre B. Ainsi, on cherche à déterminer la différence de $|A\text{-}B|$ et le signe de cette différence par rapport à la valeur seuil choisie (c'est-à-dire, de façon plus générale, par rapport à l'image SEUIL).

Pour effectuer le calcul de la valeur absolue de la différence $|A\text{-}B|$, la cellule d'inspection comporte un soustracteur 20 relié à un registre 22, lui-même connecté en sortie à un multiplexeur 24. En sortie de ce multiplexeur 24, on obtient le résultat de la valeur absolue de la différence $|A\text{-}B|$, cette sortie étant connectée sur un second soustracteur 26 qui assure la comparaison avec les données de l'image SEUIL introduite également dans ledit soustracteur.

Les autres éléments de cette cellule d'inspection constituent ce que l'on appelle la cellule d'accumulation, dans laquelle le résultat va être accumulé lorsque $|A\text{-}B|$ est supérieure ou égale à SEUIL. Cette cellule d'accumulation réalise les deux types de critères de minimisation qui ont déjà été décrits. Elle effectue donc les opérations suivantes :
- la somme des points à 1, c'est-à-dire que l'on incrémente de 1 l'accumulateur lorsque $|A\text{-}B| \geqq SEUIL$ ;
- la somme des valeurs absolues des différences (ce qui correspond à une pseudo-corrélation), c'est-à-dire, qu'on ajoute $|A\text{-}B|$ au contenu de l'accumulateur lorsque $|A\text{-}B| \geqq SEUIL$.

Le premier type d'opérations est réalisé à l'aide d'un additionneur 28, d'un multiplexeur 30, et d'un registre d'accumulation 32. La seconde opération décrite précédemment est effectuée à l'aide d'un incrémenteur 32, d'un multiplexeur 34, d'un registre d'accumulation 36 et de deux registres de décalage 38 et 40.

D'autres composants électroniques, tels que des diodes, des amplis opérationnels, etc., peuvent être utilisés pour réaliser la cellule d'inspection décrite. Leur rôle ne permettant pas une meilleure compréhension du traitement effectué dans ladite cellule d'inspection, ces composants électroniques ne seront pas décrits plus en détail.

L'utilisation de registres à décalage pour l'accumulation permet la sortie des résultats de l'accumulateur sur un seul BIT. Grâce à l'association de multiplexeurs au registre de l'accumulateur, on peut faire circuler les résultats de cellule en cellule jusqu'à la sortie.

Le circuit permettant d'effectuer l'érosion binaire de l'image de différences binaire ne sera pas décrit de façon détaillée car il est connu de l'homme de l'art.

L'interface avec le microprocesseur est composé d'un bloc de décodage d'adresses, d'un bloc de gestion des signaux de contrôle et d'un port de données bidirectionnel. Les données échangées par cette interface permettent de configurer le circuit dans les divers modes de fonctionnement, de lire le registre d'état du circuit ARTIC, de programmer les valeurs seuil et de lire les résultats de traitement.

On comprend ainsi que ce circuit ARTIC a pour avantage, notamment, d'être un circuit simple à réaliser car ne comportant que des éléments faciles à mettre en oeuvre (c'est-à-dire pas de multiplieurs, par exemple). De plus, il permet de mettre en oeuvre le procédé connu de calcul du décalage spatial entre deux images.

**Revendications**

1. Procédé pour détecter des différences significatives d'un premier flot de données numériques (I1) par rapport à un second flot de données numériques (I2), comprenant :
   - une première opération d'acquisition du premier et du second flots de données ;
   - une seconde opération de prétraitement des flots de données ainsi acquis ;
   - une troisième opération de comparaison des deux flots de données,
   caractérisé en ce que cette opération de comparaison consiste à :
   - déterminer un flot de différences (IBIN) comportant sensiblement toutes les différences binaires entre les données du premier flot de données et celles du second flot de données, les différences binaires étant des différences données à données binarisées par comparaison à au moins une valeur de seuil (SEUIL) ; et
   - à choisir, parmi ces différences binaires, la différence binaire minimale pour déterminer, à partir de cette différence, les différences suffisamment importantes pour être des données significatives.

2. Procédé selon la revendication 1, caractérisé en ce que l'opération de comparaison consiste, en outre, à déterminer, par une analyse de connexité et un regroupement de connexes réalisés à l'aide d'un processeur, des données du premier flot qui sont voisines des données significatives sélectionnées et qui comportent un décalage par rapport aux données du second flot, afin d'obtenir automatiquement une liste des différences significatives du premier flot de données par rapport au second flot de données.

3. Procédé selon l'une quelconque des revendications 1 et 2, caractérisé en ce que, les premier et second flots de données étant respectivement relatifs à une première et une seconde images (I1(i, j) et I2(i, j)), où i et j sont des indices de colonne et de ligne de pixels des images, ledit procédé consiste :
   i) à minimiser une fonction de différence :
   $$I1(i + k, j + l) - I2(i, j) ,$$
   où k et l sont des indices de décalage en colonne et en ligne du premier flot de données par rapport au second flot de données ; et
   ii) à déterminer le flot de différences relatif à une image de différences (IMDIF(i, j)) par application de l'expression :
   $$IMDIF(i, j) = I1(i + k_{opt}, j + l_{opt}) - I2(i, j) ,$$
   où $k_{opt}$ et $l_{opt}$ sont des indices de décalage optimum sur, respectivement, les colonnes et les lignes de la première image.

4. Procédé selon la revendication 3, caractérisé en ce que, lorsque les indices de décalage (k, l) ne sont pas des valeurs entières, le décalage optimum ($k_{opt}$, $l_{opt}$) est obtenu par interpolation du pixel d'indice (i+k, j+l), avec des pixels voisins, à l'aide des moyens de calculs mettant en application l'expression :
   $$I1(i + k, j + l) = (1 - k, k) ** ^{1 - l} ** I1(i, j) ,$$
   où le signe ** représente un produit de convolution.

5. Procédé selon la revendication 3 ou 4, caractérisé en ce que l'opération de prétraitement consiste en une correction des distorsions géométriques des première et seconde images, correction d'uniformité desdites première et seconde images en un filtrage pour atténuer le bruit desdites première et seconde images, et en une adaptation de dynamique entre la première et la seconde images pour homogénéiser leur contraste.

6. Dispositif de détection des différences significatives entre un premier et un second flots de données numériques mettant en oeuvre le procédé selon l'une quelconque des revendications 1 à 5, caractérisé en ce qu'il comporte un unique circuit électronique permettant d'effectuer l'opération de comparaison des deux flots de données par minimisation de la différence.

7. Dispositif selon la revendication 6, caractérisé en ce que, le premier et le second flots de données étant respectivement relatifs à une première et une seconde images (I1(i,j) et I2(i,j)), où i et j sont les indices de colonne et de ligne de pixels des images, le circuit électronique comporte :
   - des ports d'entrée (P1, P2, P3) assurant l'introduction respective, dans ledit circuit, des images I1(i,j) et I2(i,j) et de la valeur de seuil ;
   - un module (2) de rééchantillonnage selon les lignes de l'image I1(i,j) dont le port d'entrée (P1) est connecté sur des entrées (E1, E2, E3) dudit module, chaque entrée recevant l'image I1 décalée en ligne ;

13

- une pluralité de modules (4, 8, 14) de rééchantillonnage selon les colonnes recevant, en entrées, l'image I2, la valeur de seuil et l'une des sorties du module de rééchantillonnage selon les lignes ;
- une pluralité de cellules aptes à effectuer la différence I2-I1 entre l'image I1 et l'image I2, ces cellules étant regroupées en plusieurs ensembles (6, 10, 16) de m cellules, où m est un nombre entier, chaque cellule d'un ensemble étant connectée à une sortie de l'un des modules de rééchantillonnage selon les colonnes et l'un de ces ensembles fournissant, en sortie, une image (IBIN) de différences binaire ;
- un module (12) d'érosion binaire connecté, en entrée, aux sorties de l'un des modules de rééchantillonnage selon les colonnes et fournissant à sa sortie une image (IEROS) érodée ; et
- un multiplexeur (18) sur lequel est connectée, en entrée, une sortie de chaque ensemble de cellules et dont une sortie est connectée sur un microprocesseur (20).

FIG. 1

FIG. 2

FIG. 3

FIG. 4

FIG. 5

FIG. 6

EP 0 573 345 A1

FIG. 7

Office européen
des brevets

# RAPPORT DE RECHERCHE EUROPEENNE

Numero de la demande

EP    93 40 1386

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | US-A-4 579 455 (KENNETH LEVY ET AL.) <br> * abrégé * <br> * colonne 3, ligne 22 - ligne 46 * <br> --- | 1 | G06F15/70 |
| A | SYSTEMS & COMPUTERS IN JAPAN <br> vol. 21, no. 9, 1990, NEW YORK US <br> pages 99 - 110 , XP220505 <br> YUKIO MATSUMAYA ET  AL. 'Precise visual inspection of lsi wafer patterns by local perturbation pattern matching algorithm' <br> * page 101, colonne de droite, alinéa 3.2 - page 105, alinéa 3.4 * <br> --- | 1 | |
| A | US-A-4 860 371 (YUKIO MATSUYAMA ET AL.) <br> * colonne 11, ligne 6 - colonne 12, ligne 6 * <br><br> ----- | 1 | |

DOMAINES TECHNIQUES RECHERCHES (Int. Cl.5 )

G06F

Le présent rapport a été établi pour toutes les revendications

| Lieu de la recherche | Date d'achèvement de la recherche | Examinateur |
|---|---|---|
| LA HAYE | 10 SEPTEMBRE 1993 | CHATEAU J.P. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
..................................................................................
& : membre de la même famille, document correspondant

EPO FORM 1503 03.82 (P0402)